# EUROPEAN PATENT SPECIFICATION

(11) **EP 4 084 435 B1**
(45) Date of publication and mention of the grant of the patent: **08.10.2025**
(21) Application number: 21170738.5
(22) Date of filing: 27.04.2021
(51) Int. Cl.: H04L 67/125, H04L 67/025, G05B 19/042, G05B 23/02

(54) **WEB-BASED INDUSTRIAL CONTROL**
WEBBASIERTE INDUSTRIELLE STEUERUNG
COMMANDE INDUSTRIELLE BASÉE SUR LE WEB

(43) Date of publication of application: 02.11.2022
(73) Proprietor: OMRON Corporation, Shiokoji-dori, Shimogyo-ku, Kyoto-shi Kyoto 600-8530 (JP)
(72) Inventor: Hasegawa, Naoto, Kusatsu City, 525-0027 (JP); Morris, Chris, Southampton, SO31 1BJ (GB); Furseman, Mark, Fareham, PO14 1SE (GB)
(74) Representative: HKW Intellectual Property PartG mbB

(56) References cited:
- EP-A1- 3 739 849
- US-A1- 2002 169 850
- US-A1- 2003 195 934
- US-A1- 2005 155 043
- US-A1- 2007 150 819
- US-A1- 2010 293 019
- US-A1- 2017 171 315

## Description

The present invention relates to a method for diagnosing and/or controlling an industrial controller using a user device. The present invention further relates to a corresponding system and computer program product.

Industrial controllers can be used to control industrial processes, such as manufacturing processes. In order to ensure a proper functioning of the industrial controller and a correct execution of the controlled industrial process, it can be desirable to diagnose and/or control the industrial controller.

EP 3 629 549 A1 discloses an industrial controller connected to an external web server via an internet protocol. Thereby, the industrial controller can share applications with other controllers connected to the same web server, for example.

US 2002/169850 A1 discloses an industrial control system that is for controlling an industrial process and that can be accessed via the Internet. The industrial control system includes a plurality of I/O devices exchanging signals with the industrial process, and a web access module including a web server coupled to a PLC. The web server is capable of being coupled to at least one remote device via the Internet, and the PLC is coupled to the I/O devices. The web access module further includes programming software that can be utilized to generate a controller program for at least one of the PLC and one of the I/O devices. The web server is capable of providing the programming software onto the Internet for transmission to the remote device, so that the remote device is able to generate the controller program.

US 2017/171315 A1 discloses a system for interacting with industrial equipment. A mobile unit is coupled to a web server via the internet, wherein the web server is part of an industrial controller. The web server is configured to link an URL with an industrial data object. Upon a request from the mobile unit, the web server routes the industrial data object to the mobile unit. A user may enter a URL to change a set point of a process or device.

US 20007/150819 A1 discloses a system for monitoring a sensor including a GUI. The sensor includes a computer-readable medium, which contains a code for a base URL having webpages as subpages of this URL. A "set" button on a webpage triggers a storage and application of parameters, that have been changed by the user. Another webpage has a "Zero" button and a "Target" button, and when any of these buttons is pressed, the sensor adjusts its analog and digital output to the Zero Offset value / Target Offset value.

US 2010/293019 A1 discloses a web services-based communication system, where a personal data assistant web service receives messages containing information from e.g. a diagnostics web service, and conveys this information to one or more personal data assistant computers. The diagnostic web service uses profit data obtained on-line within a process plant. Parallel to the personal data assistant web service, a file system web service receives messages from e.g. the diagnostic web service and stores the information contained therein in data files, which can be accessed, transmitted, printed, and displayed.

US 2003/195934 A1 discloses a web services-based communication system. In this system, a PDA is connected to an advanced control and condition monitoring web service via a network. This advanced control and condition monitoring web service has an I/O subsystems block connected to controllers, I/O devices, and field devices, and it has a web server environment, that enables an authenticated client to exchange information or data with the I/O subsystems block.

It is one object of the present invention to provide an improved diagnosis and/or control of an industrial controller.

The invention is defined through the appended claims.

Further embodiments, features and advantages of the present invention will become apparent from the subsequent description and dependent claims, taken in conjunction with the accompanying drawings, in which:
- Fig. 1: shows a system for diagnosing and/or controlling an industrial controller according to a first embodiment;
- Fig. 2: shows a user device;
- Fig. 3: shows a method for diagnosing and/or controlling an industrial controller according to the first embodiment;
- Fig. 4: shows an example of a display of a diagnostic web page;
- Fig. 5: shows an example of a display of a modified web page;
- Fig. 6: shows an example of a display of a web page including links;
- Fig. 7: shows a system for diagnosing and/or controlling an industrial controller according to a second embodiment;
- Fig. 8: shows a method for diagnosing and/or controlling an industrial controller according to the second embodiment;
- Fig. 9: shows method steps for diagnosing and/or controlling an industrial controller according to the first embodiment;
- Fig. 10: shows a method for diagnosing and/or controlling an industrial controller according to a third embodiment; and
- Fig. 11: shows a method for diagnosing and/or controlling an industrial controller according to a fourth embodiment.

In the Figures, like reference numerals designate like or functionally equivalent elements, unless otherwise indicated.

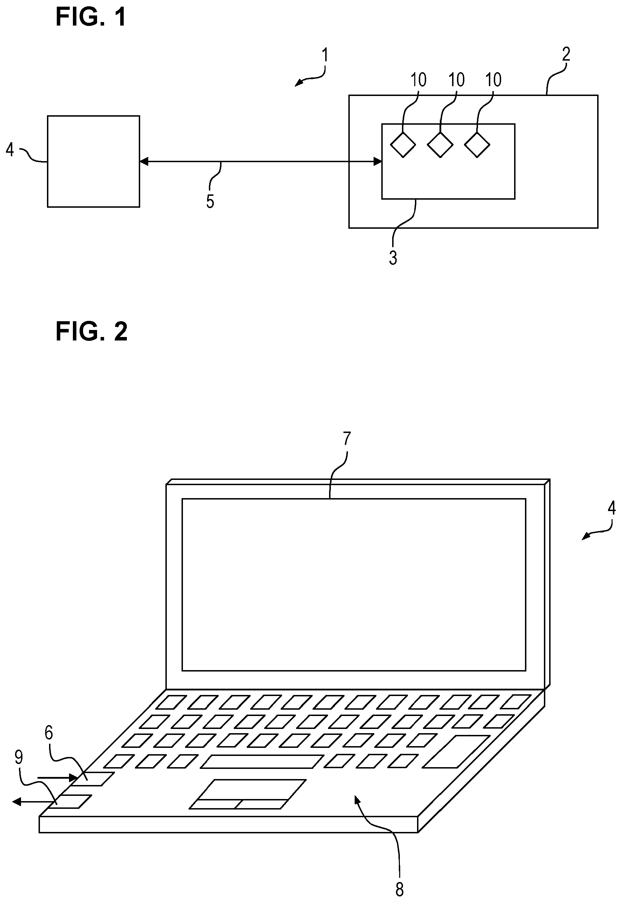

Fig. 1 shows a system 1 for diagnosing and/or controlling an industrial controller 2. The industrial controller 2 is an industrial PC used to control a manufacturing process. The system 1 includes the industrial controller 2 (referred to as "controller 2" in the following) as well as a user device 4.

The controller 2 includes a web server 3 in which multiple diagnostic web pages 10 (referred to as "web pages 10") are stored. The web server 3 is configured to communicate via a web protocol 5, which is a HTTP protocol.

The user device 4 is shown in more detail in Fig. 2. It is a laptop. The user device 4 can be provided at a distance from the controller 2, for example in a different city. As shown in Fig. 2, the user device 4 includes a display unit 7, which is a screen, a user interface unit 8 including a keyboard and a mousepad, a reception unit 6 and a transmission unit 9. The reception and transmission units 6, 9 are for communicating with the web server 3 via the HTTP protocol 5. In Fig. 2, the direction of the arrows indicates the direction of the data transfer in and out of the reception and transmission units 6, 9 respectively.

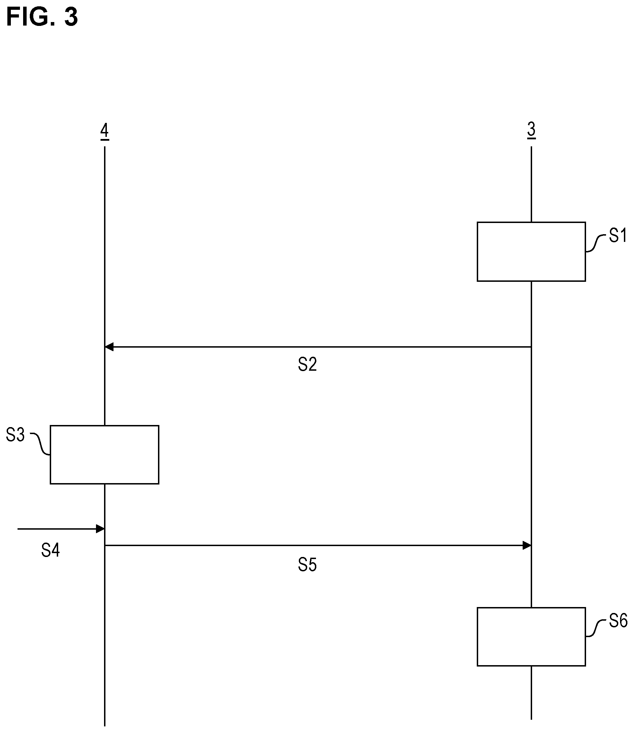

The system 1 can be used to diagnose and/or control the controller 2 by performing a method for diagnosing and/or controlling the controller 2. An example of such a method is shown in Fig. 3. The functionalities of each unit of the user device 4 and of remaining parts of the system 1 will be described in the following in view of Fig. 3.

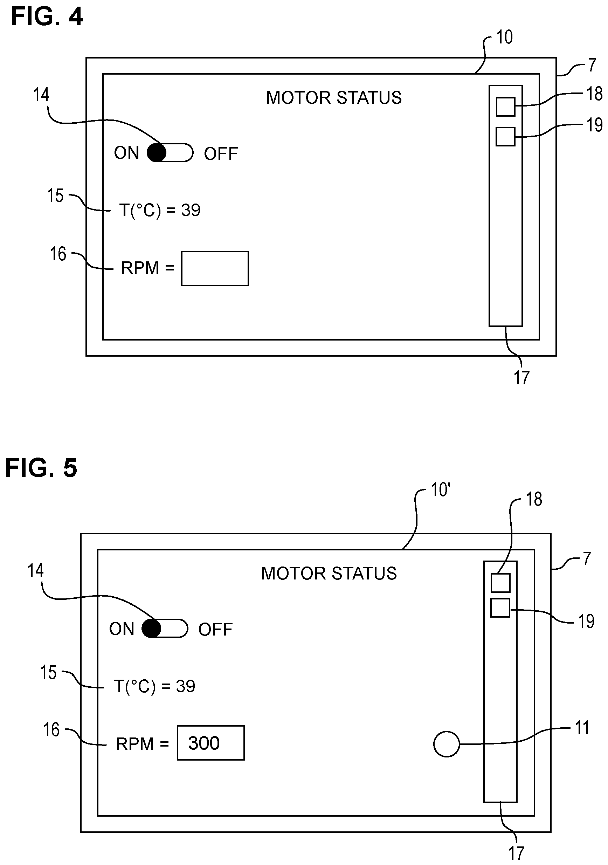

In a step S1, web pages 10 are stored in the web server 3. The web server 3 includes a storage unit such as a RAM for storing the web pages 10. An example for a web page 10 is shown in Fig. 4. The shown web page 10 is a web page relating to the diagnosis and control of a motor. The motor is part of a robot included in the manufacturing process and is controlled by the controller 2.

The web page 10 of Fig. 4 includes an ON/OFF button 14 for turning the motor ON or OFF, a temperature monitoring part 15 for indicating a temperature of the motor sensed by a thermometer provided on the motor and a motor speed input part 16 for inputting a motor speed by a user. The functionalities behind the elements 14, 15 and 16 constitute control information for monitoring and/or controlling an operation of the controller 2.

The other web pages 10 stored in the web server 3 relate to other aspects and functionalities of the controller. They include a web page 10 for monitoring the manufactured object, a web page 10 for monitoring a status of each industrial device (robots, conveyor belts, etc.) controlled by the controller 2, a web page 10 for monitoring the connectivity of the controller 2 and the like.

Referring again to Fig. 3, in a step S2, at least one of the diagnostic web pages 10 is transmitted to the user device 4 through the HTTP protocol 5. Here, the web page 10 relating to the motor status is transmitted to the user device 4. At the user device 4, the web page 10 is received using the reception unit 10.

Then, in a step S3 of Fig. 3, the user device 4 displays the received web page 10. In detail, the received web page 10 is displayed in a web application of a web browser of the user device 4. The received web page 10 is displayed on the display unit 7 of the user device 4. A user of the user device 4 gets to see the display of Fig. 4 and can monitor the operation of the motor, for example by verifying whether the temperature displayed by the temperature monitoring part 15 is in an acceptable range.

In a subsequent step S4 of Fig. 4, the user device 4 receives modification data input into the user device 4 by a user. The user inputs the modification data into the user device 4 using the user interface unit 8, i.e. by interacting with the displayed web page 10 using the keyboard and mousepad.

In the present example, the user inputs modification data for performing two types of modifications to the displayed web page 10. First, he inputs the value "300" (revolutions per minute or RPM) into the motor speed input part 16.

Secondly, he creates a new indicator for the web page 10 using the toolbox 17. The toolbox 17 is part of the displayed web page 10 and allows modifying the web page 10. The new indicator is a round warning light 11 meant to shine green if an observed status of the motor is as expected and red if any problems are observed. To create this new indicator, the user selects a round warning light 11 amongst the symbols provided in the symbol box 18 of the toolbox 17. Then, by entering the code portion 19 of the toolbox 17, he creates the code associated with the selected symbol. The code programs the light 11 to shine green if an observed status of the motor is as expected and red if any problems are observed. The symbol box 18 and the code portion 19 form tools for modifying the web page 10.

As a result of these modifications, the display unit 7 visually shows the modified web page 10' shown in Fig. 5. The modifications performed by the user (inserting a RPM value and creating a warning light 11 with its associated code) form the modification data.

In a step S5 of Fig. 3, the user device 4 transmits the modification data to the web server 3. The modification data is transferred to the web server 3 dynamically, i.e. as soon as the user performs any modifications. Alternatively, the modification data can also only be transferred every time that the user stores his modifications.

Upon receiving the modification data, in a step S6 of Fig. 3, the web server 3 modifies the web page 10 that the modification data intends to modify. The resulting modified web page 10' has a modified control information. If the web page 10 is still open on the display unit 7, it is replaced by the modified web page 10' straight away (as shown in Fig. 5). Otherwise, the modified web page 10' is shown instead of the previous web page 10 the next time when the user retrieves the web page relating to the motor status.

Advantageously, according to the method of Fig. 3 and using the system 1, the user can dynamically diagnose, monitor and control the controller 2 remotely. In particular, the modified web page 10' is used to control the controller 2. Namely, the motor speed is set to 300 RPM as set by the user.

The steps S2 to S6 of Fig. 3 can be repeated multiple times such that the user can repeatedly configure and modify the web pages 10 to control and diagnose the controller 2.

In the following, multiple improvements and modifications to the above-described method and system will be described.

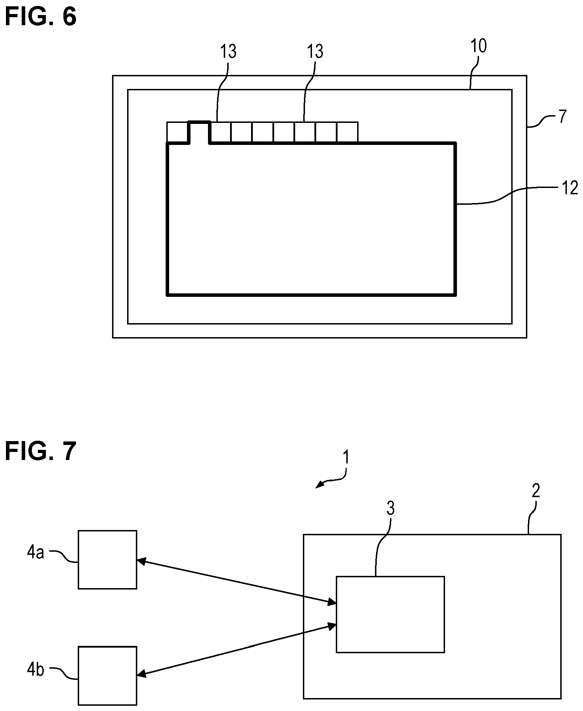

Fig. 6 shows an example of a web page 10 displayed on the display unit 7. On top of the currently displayed current web page 12, multiple links 13 are provided and shown as tabs (only two links 13 have reference signs but they are actually all identical). The links 13 are links to other web pages 10. To access these other web pages 10, the user can click on the corresponding link 13 using the mousepad 8. A request for accessing this linked web page 10 is then automatically sent to the web server 3 via the HTTP protocol 5. Upon receiving the request, the web server 3 provides the requested web page 10 to the user device 4, where it is displayed on the display unit 7.

Fig. 7 shows an embodiment in which the system 1 further includes two user devices 4a, 4b, which are identical to the user device 4 previously described. Both user devices 4a, 4b can interact with the web server 3 via the HTTP protocol 5 in the manner described above, in particular by performing and/or contributing to the steps S2 - S5 of the method described in view of Fig. 3.

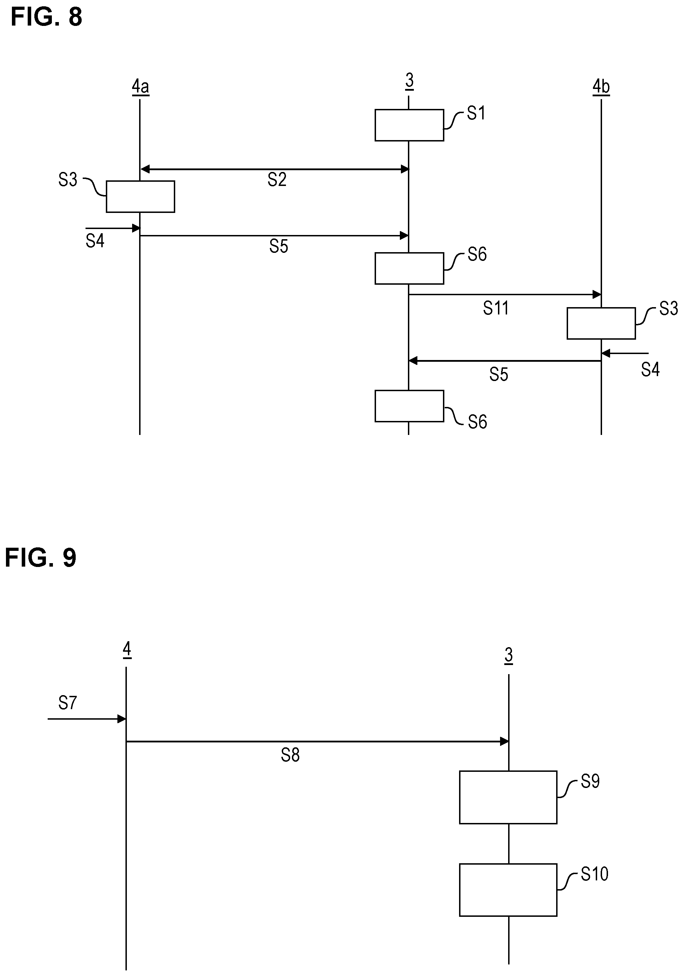

Fig. 8 shows an example of a method for diagnosing and/or controlling the controller 2 using both user devices 4a, 4b. Steps S1 to S6 shown in Fig. 8 correspond to the steps S1 to S6 described in view of Fig. 3, with user device 4a replacing user device 4 of Fig. 4. In a subsequent step S11 shown in Fig. 8, the modified web page 10' is serialized and transmitted to the other user device 4b (namely to the one that did not perform the modification) using a SignalR hub of the web server 3. In the other user device 4b, the modified web page 10' is displayed and modified as already explained in steps S3 - S6 of Fig. 3. Thus, the web pages 10 of all users are refreshed dynamically with the newest modified web page 10'.

Fig. 9 shows method steps for creating a new web page 10. The method steps S7 - S10 shown in Fig. 9 can be performed before step S1 of Fig. 3, somewhere between steps S1 and S6 of Fig. 3 and/or after step S6 of Fig. 3.

In a step S7 of Fig. 9, the user inputs a page creation instruction into the user device 4 using the user interface unit 8. The page creation instruction can be created by inputting a specific URL into the web browser or by selecting a "new page creation" button (not shown) in the toolbox 17. As soon as the page creation instruction is input into the user device 4, it is automatically transmitted to the web server 3 via the HTTP protocol 5 in a step S8.

In a step S9 of Fig. 9, the web server 3 creates a new web page 10 in accordance with the received page creation instruction. The new web page 10 is then stored together with the remaining web pages 10 in the web server 3 in step S10 of Fig. 9.

The newly created web page 10 can then be modified and complemented using the method of steps S2 to S6 of Fig. 3, for example. A link 13 to the newly created web page 10 may be generated automatically and added to all existing web pages 10 in the form of a new tab in line with the example of Fig. 6.

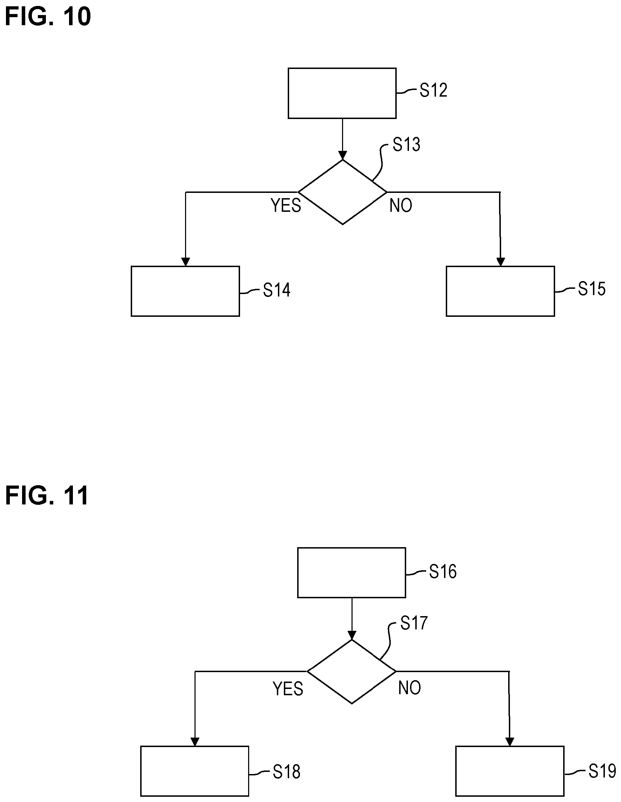

Fig. 10 shows an example for a method performed in the web server 3 for determining which web pages 10 can be transmitted to the user device 2. In detail, in the example of Fig. 10, administrators can see all web pages 10 and create and customize their own pages. Users who are not administrators can only see some of the pages, namely the ones to diagnose the controller 2, but not the ones for creating and customizing pages. To select which web pages 10 are shown to whom, the web server 3 uses role-based authorization in ASP.NET Core.

In a step S12 of Fig. 10, the web server 3 receives a status information indicating a status (role or position) of the user. The user had previously input this status information into the user device 4 when he was prompted thereto by a pop-up window before receiving any web pages 10.

In a step S13 of Fig. 10, the web server 3 verifies whether the received status information indicates that the user is an administrator. If so ("YES" in step S13), the web server 3 determines that all web pages 10 can be sent to the user in step S14. Any web page 10 sent to the administrator will have links 13 to all existing web pages 10.

In step S13 of Fig. 10, the web server 3 determines that the received status information indicates that the user is not an administrator ("NO" in step S13), the web server 3 determines that only some of the web pages 10 can be sent to the user in step S15. Web pages 10 sent to the non-administrator user will have links 13 only to selected and allowed web pages 10.

The method of Fig. 10 is preferably performed between steps S1 and S2 of Fig. 3. The method of Fig. 11 is performed in the web server 3 and allows verifying that the user requesting a web page 10 is allowed to retrieve this web page 10. In detail, in a step S16, the web server 3 receives a request from the user device 4, which is a request for a web page 10 that is only allowed to administrators. In step S17 of Fig. 11, the web server 3 determines whether the user is an administrator (along the lines explained in conjunction with Fig. 10 above).

If the web server 3 determines that the user is an administrator ("YES" in S17), the web server 3 determines that the web page 10 can be shown to the administrator in step S18 of Fig. 11. Otherwise, if the web server 3 determines that the user is not an administrator ("NO" in S17), the web server 3 determines that the web page 10 cannot be shown to the user in step S19 of Fig. 11. In this case, the web server 3 transmits a warning message to the user device 4 to be displayed to the user and indicating that the user has no right to access this web page 10 in step S19.

Although the present invention has been described in accordance with exemplary and preferred embodiments, it is obvious for the person skilled in the art that modifications are possible in all embodiments insofar said modifications are encompassed within the scope of the invention as defined by the appended claims. For example, the content of the web pages 10 and/or the performed modifications can be modified. More than two user devices 4a, 4b can be connected to a same web server 3.

### REFERENCE NUMERALS

- 1: system
- 2: industrial controller
- 3: web server
- 4, 4a, 4b: user device
- 5: internet protocol
- 6: reception unit
- 7: display unit
- 8: user interface unit
- 9: transmission unit
- 10: diagnostic web page
- 10': modified diagnostic web page
- 11: warning light symbol
- 12: current web page
- 13: link
- 14: ON/OFF button
- 15: temperature monitoring part
- 16: motor speed input part
- 17: toolbox
- 18: symbol box
- 19: code portion
- S1 - S19: method steps

## Claims

1. A method for diagnosing and/or controlling an industrial controller (2) using a user device (4, 4a, 4b), the industrial controller (2) including a web server (3), the method including:
storing (S1), in the web server (3), diagnostic web pages (10) for diagnosing and/or controlling the industrial controller (2), the diagnostic web pages (10) each including control information for controlling an operation of the industrial controller (2);
transmitting (S2) at least one of the diagnostic web pages (10) from the web server (3) to the user device (4, 4a, 4b) via a web protocol (5);
displaying (S3), on the user device (4, 4a, 4b), the at least one diagnostic web page (10) transmitted to the user device (4, 4a, 4b);
receiving (S4), by the user device (4, 4a, 4b), modification data input into the user device (4, 4a, 4b) by a user, the modification data being data specifying a modification in the control information;
transmitting (S5) the modification data from the user device (4, 4a, 4b) to the web server (3) via the web protocol (5);
modifying (S6) the at least one diagnostic web page (10) stored in the web server (3) based on the modification data transmitted to the web server (3) to obtain a modified diagnostic web page (10') having a modified control information; and
storing the modified diagnostic web page (10') in the web server (3);
**characterized in that** the method includes:
receiving (S7), by the user device (4, 4a, 4b), a web page creation instruction from the user;
transmitting (S8) the web page creation instruction from the user device (4, 4a, 4b) to the web server (3); and
storing (S10) a new diagnostic web page (10) in the web server (3) in accordance with the web page creation instruction received by the user device (4, 4a, 4b).

2. The method of claim 1, further including:
autonomously controlling the industrial controller (2) in accordance with the modified control information of the modified diagnostic web page (10').

3. The method of claim 1 or 2, further including:
transmitting the at least one modified diagnostic web page (10') from the web server (3) to the user device (4, 4a, 4b) via the web protocol (5);
displaying the at least one modified diagnostic web page (10') on the user device (4, 4a, 4b);
receiving, by the user device (4, 4a, 4b), further modification data input into the user device (4, 4a, 4b) by the user, the further modification data being data specifying a modification in the modified control information;
transmitting the further modification data from the user device (4, 4a, 4b) to the web server (3) via the web protocol (5); and
modifying the at least one modified diagnostic web page (10') stored in the web server (3) based on the further modification data transmitted to the web server (3) to obtain a further modified diagnostic web page (10') having a further modified control information.

4. The method of any one of claims 1 to 3, wherein the diagnostic web pages (10) include links (13) configured to link the diagnostic web pages (10) in a coherent manner so that a user can navigate from a displayed diagnostic web page (10) to another diagnostic web page (10) linked thereto by selecting the corresponding link (13) on the displayed diagnostic web page (10).

5. The method of any one of claims 1 to 4, wherein displaying the diagnostic web page (10) includes displaying information and/or tools 18, 19 for modifying the diagnostic web page (10) on the user device (4, 4a, 4b).

6. The method of any one of claims 1 to 5, wherein
the user device (4, 4a, 4b) uses a REST API interface to receive the modification data from the user; and/or
the user device (4, 4a, 4b) uses a TCP/IP (Transmission Control Protocol/Internet Protocol), a UDP/IP (User Datagram Protocol/Internet Protocol), a HTTP (Hypertext Transfer Protocol), an FTP (File Transfer Protocol) and/or another web browser technology to receive data from the web server (3) and transfer data to the web server (3).

7. The method of any one of claims 1 to 6, further including:
transmitting (S11) at least one diagnostic web page (10) and/or the at least one modified diagnostic web page (10') to an additional user device (4b).

8. The method of any one of claims 1 to 7, further including:
receiving, by the user device (4, 4a, 4b), a status information about a status of the user, the status in particular indicating whether the user is an administrator or not;
transmitting the status information from the user device (4, 4a, 4b) to the web server (3); and
selecting (S13), by the web server (3), one of the diagnostic web pages (10) to be transmitted to the user device (4, 4a, 4b) as the at least one diagnostic web page (10) in accordance with the status information received from the user device (4, 4a, 4b).

9. The method of any one of claims 1 to 8, further including:
receiving, by the user device (4, 4a, 4b), a request from the user requesting one of the diagnostic web pages (10);
transmitting the request from the user device (4, 4a, 4b) to the web server (3); and
transmitting the diagnostic web page (10) requested with the request as the at least one of the diagnostic web pages (10) from the web server (3) to the user device (4, 4a, 4b) via the web protocol (5).

10. The method of claim 8 and 9, further including:
verifying (S17), by the web server (3), whether the requested diagnostic web page (10) is an allowed diagnostic web page (10) in accordance with the status information; and
transmitting the requested diagnostic web page (10) to the user device (4, 4a, 4b) only if the requested diagnostic web page (10) is an allowed diagnostic web page (10) in accordance with the status information.

11. A system (1) for diagnosing and/or controlling an industrial controller (2), the system (1) including an industrial controller (2) and a user device (4, 4a, 4b) for diagnosing and/or controlling an industrial controller (2);
the industrial controller (2) including a web server (3) for storing diagnostic web pages (10) for diagnosing and/or controlling the industrial controller (2), the diagnostic web pages (10) each including control information for controlling an operation of the industrial controller (2); and
the user device (4, 4a, 4b) including:
a reception unit (6) configured to receive at least one of the diagnostic web pages (10) transmitted from the web server (3) via a web protocol (5);
a display unit (7) configured to display the at least one diagnostic web page (10) received by the reception unit (6);
a user interface unit (8) configured to receive modification data input by a user, the modification data being for modifying the at least one diagnostic web page (10) stored in the web server (3) to obtain a modified diagnostic web page (10') stored in the web server (3) and having a modified control information; and
a transmission unit (9) configured to transmit the modification data to the web server (3) via the web protocol (5);
wherein the industrial controller (2) further includes:
a modification unit configured to modify the at least one diagnostic web page (10) stored in the web server (3) based on the modification data received from the user device (4, 4a, 4b) to obtain a modified diagnostic web page (10') having a modified control information, and to store the modified diagnostic web page (10') in the web server (3);
**characterized in that**:
the user device (4, 4a, 4b) is configured to receive a web page creation instruction from the user;
the system (1) is configured for transmitting the web page creation instruction from the user device (4, 4a, 4b) to the web server (3); and
the web server (3) is configured to store a new diagnostic web page (10) in the web server (3) in accordance with the web page creation instruction received by the user device (4, 4a, 4b).

12. The system of claim 11 which is configured to perform the method according to any one of claims 1 to 10.

13. A computer program product comprising instructions which, when the program is executed by a computer, cause the computer to carry out the method of one of claims 1 to 10.

## Patentansprüche

1. Verfahren zum Diagnostizieren und/oder Steuern einer industriellen Steuerung (2) unter Verwendung einer Benutzervorrichtung (4, 4a, 4b), wobei die industrielle Steuerung (2) einen Webserver (3) beinhaltet, und wobei das Verfahren Folgendes beinhaltet:
Speichern (S1), in dem Webserver (3), von Diagnosewebseiten (10) zum Diagnostizieren und/oder Steuern der industriellen Steuerung (2), wobei die Diagnosewebseiten (10) jeweils Steuerinformationen zum Steuern eines Betriebs der industriellen Steuerung (2) beinhalten;
Übertragen (S2) mindestens einer der Diagnosewebseiten (10) von dem Webserver (3) an die Benutzervorrichtung (4, 4a, 4b) über ein Webprotokoll (5);
Anzeigen (S3), auf der Benutzervorrichtung (4, 4a, 4b), der mindestens einen an die Benutzervorrichtung (4, 4a, 4b) übertragenen Diagnosewebseite (10);
Empfangen (S4), durch die Benutzervorrichtung (4, 4a, 4b), von durch einen Benutzer in die Benutzervorrichtung (4, 4a, 4b) eingegebenen Modifikationsdaten, wobei die Modifikationsdaten Daten sind, die eine Modifikation in den Steuerinformationen spezifizieren;
Übertragen (S5) der Modifikationsdaten von der Benutzervorrichtung (4, 4a, 4b) an den Webserver (3) über das Webprotokoll (5);
Modifizieren (S6) der mindestens einen in dem Webserver (3) gespeicherten Diagnosewebseite (10) basierend auf den an den Webserver (3) übertragenen Modifikationsdaten, um eine modifizierte Diagnosewebseite (10') mit modifizierten Steuerinformationen zu erhalten; und
Speichern der modifizierten Diagnosewebseite (10') in dem Webserver (3);
**dadurch gekennzeichnet, dass** das Verfahren Folgendes beinhaltet:
Empfangen (S7), durch die Benutzervorrichtung (4, 4a, 4b), einer Webseitenerzeugungsanweisung von dem Benutzer;
Übertragen (S8) der Webseitenerzeugungsanweisung von der Benutzervorrichtung (4, 4a, 4b) an den Webserver (3); und
Speichern (S10) einer neuen Diagnosewebseite (10) in dem Webserver (3) gemäß der durch die Benutzervorrichtung (4, 4a, 4b) empfangenen Webseitenerzeugungsanweisung.

2. Verfahren nach Anspruch 1, das ferner Folgendes beinhaltet:
autonomes Steuern der industriellen Steuerung (2) gemäß den modifizierten Steuerinformationen der modifizierten Diagnosewebseite (10').

3. Verfahren nach Anspruch 1 oder 2, das ferner Folgendes beinhaltet:
Übertragen der mindestens einen modifizierten Diagnosewebseite (10') von dem Webserver (3) an die Benutzervorrichtung (4, 4a, 4b) über das Webprotokoll (5);
Anzeigen der mindestens einen modifizierten Diagnosewebseite (10') auf der Benutzervorrichtung (4, 4a, 4b);
Empfangen, durch die Benutzervorrichtung (4, 4a, 4b), von durch den Benutzer in die Benutzervorrichtung (4, 4a, 4b) eingegebenen weiteren Modifikationsdaten, wobei die weiteren Modifikationsdaten Daten sind, die eine Modifikation in den modifizierten Steuerinformationen spezifizieren;
Übertragen der weiteren Modifikationsdaten von der Benutzervorrichtung (4, 4a, 4b) an den Webserver (3) über das Webprotokoll (5); und
Modifizieren der mindestens einen in dem Webserver (3) gespeicherten modifizierten Diagnosewebseite (10') basierend auf den an den Webserver (3) übertragenen weiteren Modifikationsdaten, um eine weitere modifizierte Diagnosewebseite (10') mit weiteren modifizierten Steuerinformationen zu erhalten.

4. Verfahren nach einem der Ansprüche 1 bis 3, wobei die Diagnosewebseiten (10) Verknüpfungen (13) beinhalten, die konfiguriert sind, um die Diagnosewebseiten (10) in einer kohärenten Weise zu verknüpfen, so dass ein Benutzer von einer angezeigten Diagnosewebseite (10) zu einer anderen damit verknüpften Diagnosewebseite (10) navigieren kann, indem er die entsprechende Verknüpfung (13) auf der angezeigten Diagnosewebseite (10) auswählt.

5. Verfahren nach einem der Ansprüche 1 bis 4, wobei das Anzeigen der Diagnosewebseite (10) das Anzeigen von Informationen und/oder Werkzeugen 18, 19 zum Modifizieren der Diagnosewebseite (10) auf der Benutzervorrichtung (4, 4a, 4b) beinhaltet.

6. Verfahren nach einem der Ansprüche 1 bis 5, wobei
die Benutzervorrichtung (4, 4a, 4b) eine REST-API-Schnittstelle verwendet, um die Modifikationsdaten von dem Benutzer zu empfangen; und/oder
die Benutzervorrichtung (4, 4a, 4b) ein TCP/IP (Transmission Control Protocol/Internet Protocol), ein UDP/IP (User Datagram Protocol/Internet Protocol), ein HTTP (Hypertext Transfer Protocol), ein FTP (File Transfer Protocol) und/oder eine andere Webbrowsertechnologie verwendet, um Daten von dem Webserver (3) zu empfangen und Daten an den Webserver (3) zu übertragen.

7. Verfahren nach einem der Ansprüche 1 bis 6, das ferner Folgendes beinhaltet:
Übertragen (S11) mindestens einer Diagnosewebseite (10) und/oder der mindestens einen modifizierten Diagnosewebseite (10') an eine zusätzliche Benutzervorrichtung (4b).

8. Verfahren nach einem der Ansprüche 1 bis 7, das ferner Folgendes beinhaltet:
Empfangen, durch die Benutzervorrichtung (4, 4a, 4b), von Statusinformationen über einen Status des Benutzers, wobei der Status insbesondere angibt, ob der Benutzer ein Administrator ist oder nicht;
Übertragen der Statusinformationen von der Benutzervorrichtung (4, 4a, 4b) an den Webserver (3); und
Auswählen (S13), durch den Webserver (3), einer der an die Benutzervorrichtung (4, 4a, 4b) zu übertragenden Diagnosewebseiten (10) als die mindestens eine Diagnosewebseite (10) gemäß den von der Benutzervorrichtung (4, 4a, 4b) empfangenen Statusinformationen.

9. Verfahren nach einem der Ansprüche 1 bis 8, das ferner Folgendes beinhaltet:
Empfangen, durch die Benutzervorrichtung (4, 4a, 4b), einer Anforderung von dem Benutzer, die eine der Diagnosewebseiten (10) anfordert;
Übertragen der Anforderung von der Benutzervorrichtung (4, 4a, 4b) an den Webserver (3); und
Übertragen der mit der Anforderung angeforderten Diagnosewebseite (10) als die mindestens eine der Diagnosewebseiten (10) von dem Webserver (3) an die Benutzervorrichtung (4, 4a, 4b) über das Webprotokoll (5).

10. Verfahren nach Anspruch 8 und 9, das ferner Folgendes beinhaltet:
Verifizieren (S17), durch den Webserver (3), ob die angeforderte Diagnosewebseite (10) eine zulässige Diagnosewebseite (10) ist, gemäß den Statusinformationen; und
Übertragen der angeforderten Diagnosewebseite (10) an die Benutzervorrichtung (4, 4a, 4b) nur dann, wenn die angeforderte Diagnosewebseite (10) eine zulässige Diagnosewebseite (10) ist, gemäß den Statusinformationen.

11. System (1) zum Diagnostizieren und/oder Steuern einer industriellen Steuerung (2), wobei das System (1) eine industrielle Steuerung (2) und eine Benutzervorrichtung (4, 4a, 4b) zum Diagnostizieren und/oder Steuern einer industriellen Steuerung (2) beinhaltet;
wobei die industrielle Steuerung (2) einen Webserver (3) zum Speichern von Diagnosewebseiten (10) zum Diagnostizieren und/oder Steuern der industriellen Steuerung (2) beinhaltet, wobei die Diagnosewebseiten (10) jeweils Steuerinformationen zum Steuern eines Betriebs der industriellen Steuerung (2) beinhalten; und
wobei die Benutzervorrichtung (4, 4a, 4b) Folgendes beinhaltet:
eine Empfangseinheit (6), die eingerichtet ist, mindestens eine der von dem Webserver (3) über ein Webprotokoll (5) übertragenen Diagnosewebseiten (10) zu empfangen;
eine Anzeigeeinheit (7), die eingerichtet ist, die mindestens eine von der Empfangseinheit (6) empfangene Diagnosewebseite (10) anzuzeigen;
eine Benutzerschnittstelleneinheit (8), die eingerichtet ist, durch einen Benutzer eingegebene Modifikationsdaten zu empfangen, wobei die Modifikationsdaten zum Modifizieren der mindestens einen in dem Webserver (3) gespeicherten Diagnosewebseite (10) sind, um eine modifizierte Diagnosewebseite (10') zu erhalten, die in dem Webserver (3) gespeichert ist und modifizierte Steuerinformationen aufweist; und
eine Übertragungseinheit (9), die eingerichtet ist, die Modifikationsdaten an den Webserver (3) über das Webprotokoll (5) zu übertragen;
wobei die industrielle Steuerung (2) ferner Folgendes beinhaltet:
eine Modifikationseinheit, die eingerichtet ist, die mindestens eine in dem Webserver (3) gespeicherte Diagnosewebseite (10) basierend auf den von der Benutzervorrichtung (4, 4a, 4b) empfangenen Modifikationsdaten zu modifizieren, um eine modifizierte Diagnosewebseite (10') mit modifizierten Steuerinformationen zu erhalten, und die modifizierte Diagnosewebseite (10') in dem Webserver (3) zu speichern;
**dadurch gekennzeichnet, dass**:
die Benutzervorrichtung (4, 4a, 4b) eingerichtet ist, eine Webseitenerzeugungsanweisung von dem Benutzer zu empfangen;
das System (1) eingerichtet ist, die Webseitenerzeugungsanweisung von der Benutzervorrichtung (4, 4a, 4b) an den Webserver (3) zu übertragen; und
der Webserver (3) eingerichtet ist, eine neue Diagnosewebseite (10) in dem Webserver (3) gemäß der durch die Benutzervorrichtung (4, 4a, 4b) empfangenen Webseitenerzeugungsanweisung zu speichern.

12. System nach Anspruch 11, das eingerichtet ist, das Verfahren nach einem der Ansprüche 1 bis 10 durchzuführen.

13. Computerprogrammprodukt, das Anweisungen umfasst, die, wenn das Programm durch einen Computer ausgeführt wird, den Computer veranlassen, das Verfahren nach einem der Ansprüche 1 bis 10 auszuführen.

## Revendications

1. Procédé de diagnostic et/ou de commande d'un contrôleur industriel (2) utilisant un dispositif utilisateur (4, 4a, 4b), le contrôleur industriel (2) comprenant un serveur Web (3), le procédé comprenant :
le stockage (S1), dans le serveur Web (3), de pages Web de diagnostic (10) pour diagnostiquer et/ou commander le contrôleur industriel (2), les pages Web de diagnostic (10) comprenant chacune des informations de commande pour commander un fonctionnement du contrôleur industriel (2) ;
la transmission (S2) d'au moins une des pages Web de diagnostic (10) du serveur Web (3) au dispositif utilisateur (4, 4a, 4b) via un protocole Web (5) ;
l'affichage (S3), sur le dispositif utilisateur (4, 4a, 4b), de l'au moins une page Web de diagnostic (10) transmise au dispositif utilisateur (4, 4a, 4b) ;
la réception (S4), par le dispositif utilisateur (4, 4a, 4b), de données de modification entrées dans le dispositif utilisateur (4, 4a, 4b) par un utilisateur, les données de modification étant des données spécifiant une modification dans les informations de commande ;
la transmission (S5) des données de modification du dispositif utilisateur (4, 4a, 4b) au serveur Web (3) via le protocole Web (5) ;
la modification (S6) de l'au moins une page Web de diagnostic (10) stockée dans le serveur Web (3) sur la base des données de modification transmises au serveur Web (3) pour obtenir une page Web de diagnostic modifiée (10') ayant des informations de commande modifiées ; et
le stockage de la page Web de diagnostic modifiée (10') dans le serveur Web (3) ;
**caractérisé en ce que** le procédé comprend :
la réception (S7), par le dispositif utilisateur (4, 4a, 4b), d'une instruction de création de page Web de l'utilisateur ;
la transmission (S8) de l'instruction de création de page Web du dispositif utilisateur (4, 4a, 4b) au serveur Web (3) ; et
le stockage (S10) d'une nouvelle page Web de diagnostic (10) dans le serveur Web (3) conformément à l'instruction de création de page Web reçue par le dispositif utilisateur (4, 4a, 4b).

2. Procédé selon la revendication 1, comprenant en outre :
la commande autonome du contrôleur industriel (2) conformément aux informations de commande modifiées de la page Web de diagnostic modifiée (10').

3. Procédé selon la revendication 1 ou 2, comprenant en outre :
la transmission de l'au moins une page Web de diagnostic modifiée (10') du serveur Web (3) au dispositif utilisateur (4, 4a, 4b) via le protocole Web (5) ;
l'affichage de l'au moins une page Web de diagnostic modifiée (10') sur le dispositif utilisateur (4, 4a, 4b) ;
la réception, par le dispositif utilisateur (4, 4a, 4b), de données de modification supplémentaires entrées dans le dispositif utilisateur (4, 4a, 4b) par l'utilisateur, les données de modification supplémentaires étant des données spécifiant une modification dans les informations de commande modifiées ;
la transmission des données de modification supplémentaires du dispositif utilisateur (4, 4a, 4b) au serveur Web (3) via le protocole Web (5) ; et
la modification de l'au moins une page Web de diagnostic modifiée (10') stockée dans le serveur Web (3) sur la base des données de modification supplémentaires transmises au serveur Web (3) pour obtenir une page Web de diagnostic modifiée supplémentaire (10') ayant des informations de commande modifiées supplémentaires.

4. Procédé selon l'une quelconque des revendications 1 à 3, dans lequel les pages Web de diagnostic (10) comprennent des liens (13) configurés pour lier les pages Web de diagnostic (10) d'une manière cohérente de sorte qu'un utilisateur peut naviguer d'une page Web de diagnostic affichée (10) à une autre page Web de diagnostic (10) liée à celle-ci en sélectionnant le lien correspondant (13) sur la page Web de diagnostic affichée (10).

5. Procédé selon l'une quelconque des revendications 1 à 4, dans lequel l'affichage de la page Web de diagnostic (10) comprend l'affichage d'informations et/ou d'outils 18, 19 pour modifier la page Web de diagnostic (10) sur le dispositif utilisateur (4, 4a, 4b).

6. Procédé selon l'une quelconque des revendications 1 à 5, dans lequel
le dispositif utilisateur (4, 4a, 4b) utilise une interface API REST pour recevoir les données de modification de l'utilisateur ; et/ou
le dispositif utilisateur (4, 4a, 4b) utilise un TCP/IP (protocole de commande de transmission/protocole Internet), un UDP/IP (protocole de datagramme utilisateur/protocole Internet), un HTTP (protocole de transfert hypertexte), un FTP (protocole de transfert de fichier) et/ou une autre technologie de navigateur Web pour recevoir des données du serveur Web (3) et transférer des données au serveur Web (3).

7. Procédé selon l'une quelconque des revendications 1 à 6, comprenant en outre :
la transmission (S11) d'au moins une page Web de diagnostic (10) et/ou de l'au moins une page Web de diagnostic modifiée (10') à un dispositif utilisateur supplémentaire (4b).

8. Procédé selon l'une quelconque des revendications 1 à 7, comprenant en outre :
la réception, par le dispositif utilisateur (4, 4a, 4b), d'informations d'état concernant un état de l'utilisateur, l'état indiquant en particulier si l'utilisateur est un administrateur ou non ;
la transmission des informations d'état du dispositif utilisateur (4, 4a, 4b) au serveur Web (3) ; et
la sélection (S13), par le serveur Web (3), de l'une des pages Web de diagnostic (10) à transmettre au dispositif utilisateur (4, 4a, 4b) en tant que l'au moins une page Web de diagnostic (10) conformément aux informations d'état reçues du dispositif utilisateur (4, 4a, 4b).

9. Procédé selon l'une quelconque des revendications 1 à 8, comprenant en outre :
la réception, par le dispositif utilisateur (4, 4a, 4b), d'une demande de l'utilisateur demandant l'une des pages Web de diagnostic (10) ;
la transmission de la demande du dispositif utilisateur (4, 4a, 4b) au serveur Web (3) ; et
la transmission de la page Web de diagnostic (10) demandée avec la demande en tant que l'au moins une des pages Web de diagnostic (10) du serveur Web (3) au dispositif utilisateur (4, 4a, 4b) via le protocole Web (5).

10. Procédé selon la revendication 8 et 9, comprenant en outre :
la vérification (S17), par le serveur Web (3), si la page Web de diagnostic demandée (10) est une page Web de diagnostic autorisée (10) conformément aux informations d'état ; et
la transmission de la page Web de diagnostic demandée (10) au dispositif utilisateur (4, 4a, 4b) uniquement si la page Web de diagnostic demandée (10) est une page Web de diagnostic autorisée (10) conformément aux informations d'état.

11. Système (1) de diagnostic et/ou de commande d'un contrôleur industriel (2), le système (1) comprenant un contrôleur industriel (2) et un dispositif utilisateur (4, 4a, 4b) de diagnostic et/ou de commande d'un contrôleur industriel (2) ;
le contrôleur industriel (2) comprenant un serveur Web (3) pour stocker des pages Web de diagnostic (10) pour diagnostiquer et/ou commander le contrôleur industriel (2), les pages Web de diagnostic (10) comprenant chacune des informations de commande pour commander un fonctionnement du contrôleur industriel (2) ; et
le dispositif utilisateur (4, 4a, 4b) comprenant :
une unité de réception (6) configurée pour recevoir au moins l'une des pages Web de diagnostic (10) transmises du serveur Web (3) via un protocole Web (5) ;
une unité d'affichage (7) configurée pour afficher l'au moins une page Web de diagnostic (10) reçue par l'unité de réception (6) ;
une unité d'interface utilisateur (8) configurée pour recevoir des données de modification entrées par un utilisateur, les données de modification étant destinées à modifier l'au moins une page Web de diagnostic (10) stockée dans le serveur Web (3) pour obtenir une page Web de diagnostic modifiée (10') stockée dans le serveur Web (3) et ayant des informations de commande modifiées ; et
une unité de transmission (9) configurée pour transmettre les données de modification au serveur Web (3) via le protocole Web (5) ;
dans lequel le contrôleur industriel (2) comprend en outre :
une unité de modification configurée pour modifier l'au moins une page Web de diagnostic (10) stockée dans le serveur Web (3) sur la base des données de modification reçues du dispositif utilisateur (4, 4a, 4b) pour obtenir une page Web de diagnostic modifiée (10') ayant des informations de commande modifiées, et pour stocker la page Web de diagnostic modifiée (10') dans le serveur Web (3) ;
**caractérisé en ce que** :
le dispositif utilisateur (4, 4a, 4b) est configuré pour recevoir une instruction de création de page Web de l'utilisateur ;
le système (1) est configuré pour transmettre l'instruction de création de page Web du dispositif utilisateur (4, 4a, 4b) au serveur Web (3) ; et
le serveur Web (3) est configuré pour stocker une nouvelle page Web de diagnostic (10) dans le serveur Web (3) conformément à l'instruction de création de page Web reçue par le dispositif utilisateur (4, 4a, 4b).

12. Système selon la revendication 11, qui est configuré pour réaliser le procédé selon l'une quelconque des revendications 1 à 10.

13. Produit de programme informatique comprenant des instructions qui, lorsque le programme est exécuté par un ordinateur, amènent l'ordinateur à réaliser le procédé selon l'une des revendications 1 à 10.
